(19) Europäisches Patentamt
European Patent Office
Office européen des brevets

(11) **EP 4 026 063 B1**

(12) **EUROPÄISCHE PATENTSCHRIFT**

(45) Veröffentlichungstag und Bekanntmachung des Hinweises auf die Patenterteilung:
**10.09.2025   Patentblatt 2025/37**

(21) Anmeldenummer: **20747407.3**

(22) Anmeldetag: **29.07.2020**

(51) Internationale Patentklassifikation (IPC):
**G06N 3/082** (2023.01)   **G06N 3/045** (2023.01)

(52) Gemeinsame Patentklassifikation (CPC):
**G06N 3/082; G06N 3/045**

(86) Internationale Anmeldenummer:
**PCT/EP2020/071324**

(87) Internationale Veröffentlichungsnummer:
**WO 2021/043509 (11.03.2021 Gazette 2021/10)**

(54) **VERFAHREN ZUM KOMPRIMIEREN EINES NEURONALEN NETZES**

METHOD FOR COMPRESSING A NEURAL NETWORK

PROCÉDÉ DE COMPRESSION D'UN RÉSEAU NEURONAL

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität:  **04.09.2019   DE 102019213458**

(43) Veröffentlichungstag der Anmeldung:
**13.07.2022   Patentblatt 2022/28**

(73) Patentinhaber: **VOLKSWAGEN AKTIENGESELLSCHAFT**
**38440 Wolfsburg (DE)**

(72) Erfinder:
• **SCHLICHT, Peter**
  **38442 Wolfsburg (DE)**
• **KAPOOR, Nikhil**
  **38440 Wolfsburg (DE)**
• **VARGHESE, John Serin**
  **38126 Braunschweig (DE)**
• **SCHNEIDER, Jan David**
  **38444 Wolfsburg (DE)**

(56) Entgegenhaltungen:
• **PAVLO MOLCHANOV ET AL: "PRUNING CONVOLUTIONAL NEURAL NETWORKS FOR RESOURCE EFFICIENT INFERENCE", 8 June 2017 (2017-06-08), pages 1 - 17, XP055507236, Retrieved from the Internet <URL:https://arxiv.org/pdf/1611.06440.pdf> [retrieved on 20180914]**
• **AKASH S. GAIKWAD: "Pruning Convolution Neural Network (SqueezeNet) for Efficient Hardware Deployment", 1 December 2018 (2018-12-01), XP055743426, Retrieved from the Internet <URL:https://core.ac.uk/download/pdf/162543555.pdf> [retrieved on 20201023]**

**Beschreibung**

Die Erfindung betrifft ein computerimplementiertes Verfahren zum Komprimieren eines Neuronalen Netzes, eine Vorrichtung zur Datenverarbeitung, ein Computerprogramm und ein Datenträgersignal.

Moderne Fahrerassistenzsysteme und Fahrfunktionen zum automatisierten Fahren verwenden zunehmend maschinelles Lernen, um unter anderem die Fahrzeugumgebung einschließlich anderer Verkehrsteilnehmer (z.B. Fußgänger und weitere Fahrzeuge) zu erkennen und deren Verhalten zu beschreiben. Hierbei erfolgt die Auswertung von Eingangsdaten (Input) aus verschiedenen Quellen (z.B. Kameras, Radar, Lidar) durch tiefe Neuronale Netze, welche an diesen unter anderem eine pixelweise Klassifikationen vornehmen (semantische Segmentierung) oder Umschließungsrahmen (bounding box) erkannter Objekte erzeugen.

In beiden Fällen werden üblicherweise Faltungsnetze (Convolutional Neural Networks, CNN) eingesetzt, welche im Training die Gewichte sogenannter Filter basierend auf dem Input parametrisieren. Die verwendeten Faltungsnetze nutzen hierbei zunehmend eine Vielzahl von Filtern und Schichten (layer), sodass der benötigte Zeit- bzw. Rechenaufwand zur Verarbeitung (Inferenz) von Eingangsdaten zu Ausgaben (Output) zunimmt. Da der Anwendung von Neuronalen Netzen im Bereich des automatischen Fahrens aufgrund der dynamischen Umgebung harte Einschränkungen bezüglich einer benötigten Rechenzeit obliegen und gleichzeitig die in Fahrzeugen einsetzbare Hardware (Rechenkapazitäten) nicht beliebig skaliert werden kann, ist die Größe des Neuronalen Netzes ein limitierender Faktor im Hinblick auf die Einsatzmöglichkeiten in solchen Systemen.

Sogenanntes Prunen (engl. Pruning) versucht die Größe des Neuronalen Netzes durch Entfernen von einzelnen Elementen, das heißt von Neuronen, Parametern bzw. ganzen Filtern, zu verringern. Hierbei ist die Wahl der zu entfernenden Neuronen bzw. Filter von Bedeutung. Unterschiedliche Filter können die Ausgabe des Netzes unterschiedlich stark beeinflussen. Es gilt also, durch ausgewählte Strategien diejenigen Filter zu selektieren, deren Entfernung die geringsten Auswirkungen auf die Ausgabe(-qualität) verursacht und dabei zugleich eine möglichst große Anzahl an Filtern zu prunen, um eine signifikante Verkleinerung des Netzes und somit möglichst geringe Inferenz- und Trainingszeiten zu erreichen.

Aus der US 2018/0336468 A1 sind Systeme und Verfahren zum Prunen eines Faltungsnetzes (CNN) bekannt. Das Verfahren umfasst das Extrahieren von Faltungsschichten aus einem trainierten CNN, wobei jede Faltungsschicht eine Kernelmatrix mit mindestens einem in einem entsprechenden Ausgangskanal der Kernelmatrix ausgebildeten Filter enthält, einem Merkmalskartensatz mit einer Merkmalskarte (feature map), die jedem Filter entspricht. Für jeden Kernel wird ein absolutes Kernelgewicht bestimmt und über jeden Filter aufsummiert, um eine Stärke jedes Filters zu bestimmen. Die Stärke jedes Filters wird mit einer Schwelle verglichen und ein Filter wird entfernt, wenn die bestimmte Stärke unterhalb der Schwelle liegt. Eine Merkmalskarte (feature map), die jedem der entfernten Filter entspricht, wird entfernt, um das CNN zu prunen. Das CNN wird erneut trainiert, um ein gepruntes CNN mit weniger Faltungsschichten zu erzeugen.

Aus der US 2018/0114114 A1 sind ein Verfahren, ein computerlesbares Medium und ein System zum Prunen eines Neuronalen Netzes bekannt. Das Verfahren umfasst die Schritte des Empfangens von Gradienten erster Ordnung einer Kostenfunktion relativ zu Schichtparametern für ein trainiertes Neuronales Netz und des Berechnens eines Pruningkriteriums für jeden Schichtparameter basierend auf dem Gradienten erster Ordnung, der dem Schichtparameter entspricht, wobei das Pruningkriterium eine Wichtigkeit jedes Neurons angibt, das in dem trainierten neuronalen Netz enthalten ist und dem Schichtparameter zugeordnet ist. Das Verfahren umfasst die zusätzlichen Schritte des Identifizierens mindestens eines Neurons mit der geringsten Wichtigkeit und des Entfernens des mindestens einen Neurons aus dem trainierten Neuronalen Netz, um ein gepruntes Neuronales Netzwerk zu erzeugen.

Aus P. Molchanov et al., Pruning Convolutional Neural Networks for Resource Efficient Inference, arXiv: 1611.06440v2 [cs.LG], 8. Juni 2017, Seiten 1-17, URL: https://arxiv.org/pdf/1611.06440.pdf, ist ein Verfahren zum Prunen eines Neuronalen Netzes bekannt.

Akash S. Gaikwad, Pruning Convolution Neural Network (SqeezeNet) for Efficient Hardware Development, Masterarbeit, Purdue University, Indiana, USA, 1. Dezember 2018, URL: https://core.ac.uk/download/pdf/162543555. pdf, beschreibt das Prunen von Faltungsnetzen.

Der Erfindung liegt die Aufgabe zu Grunde, ein Verfahren zum Komprimieren eines Neuronalen Netzes, eine zugehörige Vorrichtung zur Datenverarbeitung, ein zugehöriges Computerprogramm und ein zugehöriges Datenträgersignal zu verbessern.

Die Aufgabe wird erfindungsgemäß durch ein Verfahren mit den Merkmalen des Patentanspruchs 1, eine Vorrichtung mit den Merkmalen des Patentanspruchs 9, 44 , ein Computerprogramm mit den Merkmalen des Patentanspruchs 12 und ein Datenträgersignal mit den Merkmalen des Patentanspruchs 13 gelöst. Vorteilhafte Ausgestaltungen der Erfindung ergeben sich aus den Unteransprüchen.

Insbesondere wird ein computerimplementiertes Verfahren zum Komprimieren eines Neuronalen Netzes zur Verfügung gestellt, wobei dem Neuronalen Netz zeitlich sich ändernde Eingangsdaten zugeführt werden, wobei zeitliche Aktivierungsdifferenzen von Elementen des Neuronalen Netzes für zeitlich benachbarte Eingangsdaten bestimmt werden, und wobei die bestimmten zeitlichen Aktivierungsdifferenzen bereitgestellt werden, um das Neuronale Netz in Abhängigkeit der bestimmten zeitlichen Aktivierungsdifferenzen zu prunen.

Ferner wird insbesondere eine Vorrichtung zur Datenverarbeitung geschaffen, umfassend Mittel zur Ausführung der Verfahrensschritte des erfindungsgemäßen Verfahrens, wobei die Mittel eine Recheneinrichtung und eine Speichereinrichtung umfassen.

Weiter wird insbesondere ein Computerprogramm geschaffen, umfassend Befehle, die bei der Ausführung des Computerprogramms durch einen Computer diesen veranlassen, die Verfahrensschritte des erfindungsgemäßen Verfahrens auszuführen.

Zudem wird insbesondere ein Datenträgersignal geschaffen, umfassend Befehle, die bei der Ausführung durch einen Computer diesen veranlassen, die Verfahrensschritte des erfindungsgemäßen Verfahrens auszuführen.

Das Verfahren ermöglicht es, das Neuronale Netz unter Berücksichtigung eine stabilitätsorientierten Kriteriums zu komprimieren, das heißt eine Struktur des Neuronalen Netzes zu verkleinern. Dies erfolgt dadurch, dass dem Neuronalen Netz sich zeitlich ändernde Eingangsdaten zugeführt werden. Durch die zeitliche Änderung der Eingangsdaten, ändern sich auch Aktivierungen bzw. Werte an jeweiligen Ausgängen der einzelnen Elemente des Neuronalen Netzes. Eine zeitliche Änderung der Aktivierungen bzw. Werte an den Ausgängen wird dann über zeitliche Aktivierungsdifferenzen der Elemente des Neuronalen Netzes abgebildet. Die Erfindung beruht hierbei auf der folgenden Überlegung: Da die Eingangsdaten, welche auf Grundlage von erfassten Sensordaten bereitgestellt werden, in der Regel bei einer kleinen Änderung der Zeit nur wenig variieren, sollten auch die Aktivierungsdifferenzen, die für diese zeitliche Änderung an den Ausgängen der Elemente bestimmt werden, nur wenig variieren. Große Aktivierungsdifferenzen deuten daher auf instabile Elemente in dem Neuronalen Netz hin. Über das Bestimmen der zeitlichen Aktivierungsdifferenzen können die instabilen Elemente identifiziert werden. Sind die instabilen Elemente identifiziert, so können diese im Wege des Prunings aus der Struktur des Neuronalen Netzes entfernt werden.

Das Verfahren hat daher den Vorteil, dass neben einer Kompression des Neuronalen Netzes gleichzeitig auch eine Stabilität des Neuronalen Netzes verbessert werden kann.

Das Verfahren wird als computerimplementierte Erfindung ausgeführt.

Insbesondere wird das Verfahren mittels einer Recheneinrichtung, die auf eine Speichereinrichtung zugreifen kann, ausgeführt. Die Recheneinrichtung kann als eine Kombination von Hardware und Software ausgebildet sein, beispielsweise als Programmcode, der auf einem Mikrocontroller oder Mikroprozessor ausgeführt wird. Die Recheneinrichtung betreibt insbesondere das Neuronale Netz, das heißt führt die zum Betreiben des Neuronalen Netzes notwendigen Rechenoperationen auf bereitgestellten Eingangsdaten aus, sodass Aktivierungen bzw. Werte an Ausgängen des Neuronalen Netzes in Form von Ausgangsdaten inferiert und bereitgestellt werden können.

Die Eingangsdaten sind Sensordaten, insbesondere ein Sensordatenstrom von im Zeitverlauf erfassten Sensordaten. Insbesondere werden die Sensordaten von Sensoren erfasst und einer Eingangsschicht des Neuronalen Netzes zugeführt, beispielsweise über eine hierfür ausgebildete Eingangsschnittstelle. Ein Sensor ist insbesondere eine Kamera, ein Lidar- oder ein Radarsensor. Prinzipiell können jedoch auch fusionierte Sensordaten verwendet werden. Die Eingangsdaten sind insbesondere nicht markierte (ungelabelte) Eingangsdaten. Die Sensordaten werden beispielsweise von einer Kamera eines Kraftfahrzeugs als Videosequenz aus Videoeinzelbildern bereitgestellt.

Eine Aktivierungsdifferenz ist eine Differenz, die aus Aktivierungen bzw. Werten eines Ausgangs bestimmt wird, die von einem Element des Neuronalen Netzes zu benachbarten, insbesondere aufeinanderfolgenden, Zeitpunkten inferiert bzw. berechnet werden. Sind die Eingangsdaten beispielsweise Kameradaten, so können die Eingangsdaten mit zwei zeitlich aufeinanderfolgenden Einzelbildern der Kameradaten korrespondieren. Über die Aktivierungsdifferenz wird daher eine zeitliche Fluktuation der Aktivierungen am Ausgang eines Elements des Neuronalen Netzes in Abhängigkeit zeitlich variierender Eingangsdaten abgebildet.

Das Neuronale Netz ist insbesondere ein tiefes Neuronales Netz, insbesondere ein Faltungsnetz (Convolutional Neuronal Network, CNN).

Ein Element ist insbesondere ein Neuron des Neuronalen Netzes. Handelt es sich bei dem Neuronalen Netz um ein Faltungsnetz, so ist ein Element insbesondere ein Filter (auch als Filterkern bezeichnet) des Faltungsnetzes. Die Aktivierungsdifferenzen werden dann jeweils für die Filter des Faltungsnetzes bestimmt.

Prunen des Neuronalen Netzes soll insbesondere bedeuten, dass das Neuronale Netz in seiner Struktur verändert, insbesondere beschnitten bzw. verkleinert wird. Dies erfolgt durch Entfernen von mindestens einem Element und/oder von Teilen (z.B. Parameter oder Eingangskanäle etc.) der Elemente aus dem Neuronalen Netz. Auf Grund der geänderten, insbesondere beschnittenen, Struktur, kann das geprunte Neuronale Netz mit einer geringeren Rechenleistung auf Eingangsdaten angewandt werden. Das geprunte Neuronale Netz ist dann in seiner Struktur komprimiert.

Es ist vorgesehen, dass das Neuronale Netz in Abhängigkeit der bestimmten zeitlichen Aktivierungsdifferenzen geprunt wird.

Es kann insbesondere vorgesehen sein, dass das Verfahren zyklisch wiederholt wird. Hierdurch kann das Neuronale Netz schrittweise weiter komprimiert werden. Das Wiederholen des Verfahrens kann beispielsweise abgebrochen werden, wenn die Aktivierungsdifferenzen unterhalb eines vorgegebenen Schwellenwertes liegen, das heißt wenn ein vorgegebener Grad an Stabilität erreicht ist.

Es kann vorgesehen sein, dass das geprunte Neuronale Netz nach dem Prunen ausgegeben wird, beispielsweise in Form eines die Struktur und die Gewichtungen bzw. Parameter des Neuronalen Netzes beschreibenden digitalen Datensatzes.

Insbesondere ist vorgesehen, dass aus den bestimmten Aktivierungsdifferenzen elementeweise Mittelwerte gebildet werden, wobei das Prunen in Abhängigkeit der gebildeten Mittelwerte durchgeführt wird. Hierdurch können kurzzeitig auftretende Spitzen in den Aktivierungsdifferenzen berücksichtigt bzw. abgeschwächt werden. Derartige Spitzen führen alleine dann nicht dazu, dass das zugehörige Element des Neuronalen Netzes als instabil identifiziert wird. Erst wenn ein für dieses Element bestimmter Mittelwert aus mehreren Aktivierungsdifferenzen beispielsweise einen Schwellenwert überschreitet, wird das zugehörige Element zum Prunen ausgewählt. Die Mittelwerte können als arithmetisches Mittel, zeitliches Mittel oder geometrisches Mittel bestimmt werden.

Das Bestimmen der Aktivierungsdifferenzen erfolgt insbesondere während einer Anwendungs- bzw. Inferenzphase des Neuronalen Netzes, das heißt das Neuronale Netz ist beim Durchführen des Verfahrens insbesondere ein bereits (gut) trainiertes Neuronales Netz.

Beim Prunen ist insbesondere vorgesehen, dass das Neuronale Netz in homogener Weise geprunt wird. Homogen soll hierbei bedeuten, dass im Mittel alle Bereiche des Neuronalen Netzes gleich stark geprunt werden. Hierdurch kann verhindert werden, dass Bereiche, beispielsweise einzelne Schichten, des Neuronalen Netzes übermäßig geprunt werden und hierdurch eine Funktionalität bzw. eine funktionale Güte des Neuronalen Netzes übermäßig beeinträchtigt wird.

Prinzipiell ist es möglich, das Verfahren auch in einem Stapeldurchlauf auf gespeicherte Eingangsdaten anzuwenden, das heißt die Eingangsdaten müssen nicht auf Grundlage von aktuellen erfassten Sensordaten bereitgestellt werden. Die Sensordaten können beispielsweise auch im Zeitverlauf gespeichert werden und später dem Neuronalen Netz verfahrensgemäß als Eingangsdaten zugeführt werden. Hierdurch kann das Neuronale Netz auch auf Grundlage von gespeicherten Sensordaten komprimiert werden.

Das Verfahren kann beispielsweise teilweise in einem Kraftfahrzeug und teilweise in einer zentralen Datenverarbeitungseinrichtung ausgeführt werden. Es kann beispielsweise vorgesehen sein, dass das Bestimmen der Aktivierungsdifferenzen für die Elemente des Neuronalen Netzes in dem Kraftfahrzeug durchgeführt wird, beispielsweise für ein Neuronales Netz, das einer Umfelderkennung und/oder einer Unterstützung einer automatisierten Fahrfunktion des Kraftfahrzeugs dient. Die bestimmten Aktivierungsdifferenzen werden an die zentrale Datenverarbeitungseinrichtung übermittelt, die das Prunen des Neuronalen Netzes vornimmt. Das geprunte Neuronale Netz kann anschließend an das Kraftfahrzeug übermittelt werden, wo es das ungeprunte Neuronale Netz ersetzt.

Alternativ kann auch vorgesehen sein, dass das Verfahren vollständig in einem Kraftfahrzeug oder vollständig in einer zentralen Datenverarbeitungseinrichtung ausgeführt wird.

In einer Ausführungsform ist vorgesehen, dass zumindest ein Teil der bestimmten Aktivierungsdifferenzen in Abhängigkeit von mindestens einem Einflussparameter bestimmt wird. Hierdurch kann beispielsweise erreicht werden, dass die Aktivierungsdifferenzen im zeitlichen Verlauf oder situationsabhängig beeinflusst werden können. Beispielsweise kann eine Geschwindigkeit (z.B. über einen GPS-Sensor), ein aktuelles Wetter (z.B. über einen Regensensor) und/oder ein Lenkwinkel (z.B. über einen Lenkwinkelsensor) dazu verwendet werden, eine bestimmte Aktivierungsdifferenz situationsbedingt zu verstärken oder abzuschwächen. Insbesondere situationsbedingte Sensoreigenschaften können hierdurch berücksichtigt werden.

In einer Ausführungsform ist vorgesehen, dass die zeitlichen Aktivierungsdifferenzen relativ zu zeitlichen Aktivierungsdifferenzen einer vorausgehenden Netzschicht und/oder von zeitlichen Veränderungen der Eingangsdaten bzw. eines Eingangsdatenstroms bestimmt werden. Hierdurch kann eine Identifikation tatsächlich instabiler (also instabil auch in Bezug auf eine tatsächlich auftretende Dynamik in den Eingangsdaten und auf eine vorhandene Instabilität der vorausgehenden Netzschicht) Bereiche des Neuronalen Netzes sichergestellt werden. Dies wird weiter unten detaillierter ausgeführt.

In einer Ausführungsform ist vorgesehen, dass auf Grundlage der bestimmten zeitlichen Aktivierungsdifferenzen eine Rangfolge der Elemente erstellt wird, um das Prunen in Abhängigkeit der erstellten Rangfolge durchzuführen. Insbesondere wird das Neuronale Netz in Abhängigkeit der erstellten Rangfolge geprunt. Insbesondere erfolgt das Erstellen der Rangfolge auf Grundlage von jeweiligen Mittelwerten der bestimmten Aktivierungsdifferenzen. Ausgehend von der erstellten Rangfolge kann beispielsweise vorgesehen sein, dass eine vorgegebene Anzahl von Rängen beim Prunen berücksichtigt wird, beispielsweise die 10, 100 oder 1000 Elemente des Neuronalen Netzes (z.B. die 10, 100 oder 1000 Filter des Faltungsnetzes), die die größten (gemittelten) Aktivierungsdifferenzen aufweisen. Das Erstellen der Rangfolge ermöglicht es, das Neuronale Netz zu komprimieren und hierbei gezielt die instabilsten Elemente auszuwählen und zu prunen.

In einer weiterbildenden Ausführungsform ist daher vorgesehen, dass die Rangfolge derart bestimmt wird, dass die Elemente des Neuronalen Netzes mit den größten zeitlichen Aktivierungsdifferenzen geprunt werden. Hierdurch werden die instabilsten Elemente des Neuronalen Netzes aus dem Neuronalen Netz entfernt.

Eine Rangfolgenfunktion zum Bestimmen einer (In-)Stabilität eines Elements des Neuronalen Netzes kann in einem einfachen Fall definiert sein durch eine zeitliche Aktivierungsdifferenz zwischen Aktivierungen des Elementes in Bezug auf eine (zeitliche) Änderung in den Eingangsdaten (z.B. eine Änderung in zeitlich benachbarten Videoeinzelbildern).

Sofern es sich bei den Eingangsdaten um Videoeinzelbilder handelt, beispielsweise um Kamerabilder einer Umfeldkamera, kann in einer Rangfolgenfunktion der Index der Strukturellen Ähnlichkeit (Structural Similarity Index, SSIM) zwischen den Videoeinzelbildern unterschiedlicher Zeitpunkte verwendet werden, um einen Unterschied zwischen zeitlich benachbarten Videoeinzelbilden zu bestimmen.

Für ein Convolutional Neural Network (CNN) werden in einer Weiterbildung der Rangfolgenfunktion für einen betrachteten Filter (auch als Filterkern bezeichnet) in einer Faltungsschicht des CNNs zusätzlich die zeitlichen Aktivierungsdifferenzen in einer voranstehenden Faltungsschicht des Neuronalen Netzes berücksichtigt. Hierdurch kann ein Einfluss einer voranstehenden Faltungsschicht beim Bestimmen bzw. Berechnen der zeitlichen Aktivierungsdifferenzen berücksichtigt bzw. entfernt werden. Der Gedanke dahinter ist, dass sich Aktivierungsdifferenzen durch das Neuronale Netz hindurch fortpflanzen können, da die zeitlichen Aktivierungsdifferenzen einer Faltungsschicht an die nachfolgende Faltungsschicht weitergegeben werden. Durch Berücksichtigung der zeitlichen Aktivierungsdifferenzen der jeweils voranstehenden Faltungsschicht werden die für einzelne Filter berechneten Aktivierungsdifferenzen über das gesamte Neuronale Netz bzw. schichtenübergreifend hinweg vergleichbar gemacht. Die Rangfolge der Elemente des Neuronalen Netzes lässt sich hierdurch verbessert bestimmen.

Es kann weiterbildend vorgesehen sein, dass über mehrere Zeitschritte gemittelt wird. Ferner kann vorgesehen sein, dass beispielsweise über mehrere Sätze von Eingangsdaten, beispielsweise mehrere jeweils aus Videoeinzelbildern bestehenden Videosequenzen gemittelt wird.

In einer weiterbildenden Ausführungsform ist vorgesehen, dass die Rangfolge unter Berücksichtigung mindestens einer Zielgröße erstellt wird. Hierdurch kann eine erweiterte Rangfolge erzeugt werden. Insbesondere können durch Berücksichtigung der mindestens einen Zielgröße neben der Stabilität des Neuronalen Netzes weitere Zielvorgaben berücksichtigt werden. Diese Zielvorgaben können beispielsweise eine Robustheit des Neuronalen Netzes betreffen. Dient das Neuronale Netz beispielsweise zum Erkennen von Objekten in Kameradaten, so kann eine Robustheit gegenüber Helligkeitsänderungen als Zielgröße angestrebt werden. Hierbei wird bei der Auswahl der zeitlichen Varianz über die Eingangsdaten darauf geachtet, dass sich diese zeitliche Varianz lediglich als Varianz der mindestens einen Zielgröße manifestiert. Die Aufstellung der Rangfolge erfolgt dann analog. Ferner können Filter, die innerhalb des Neuronalen Netzes einen größeren Einfluss haben, trotz einer großen Aktivierungsdifferenz beibehalten werden. Auch können Filter, die einer Funktionalität nach anderen Filtern gleichen (z.B. Filter, die Kameradaten im Wege einer Faltung mit einer Filterfunktion filtern), in der Rangfolge auf weiter vorne liegende Ränge verschoben werden, das heißt beim Prunen bzw. beim Entfernen bevorzugt werden. Hingegen können Filter, die anderen Filtern nicht ähneln, in der Rangfolge auf weiter hinten liegende Ränge verschoben werden, das heißt weniger bevorzugt geprunt werden. Weitere Zielgrößen können pluralitätsorientiert sein, das heißt dafür sorgen, dass viele verschiedene Merkmale in den Eingangsdaten erkannt bzw. herausgefiltert werden. Entsprechend wird eine bestimmte Rangfolge dahingehend angepasst, dass weiterhin viele verschiedene Merkmale bzw. eine Mindestanzahl an unterschiedlichen Merkmalen erkannt bzw. herausgefiltert werden kann. Eine weitere Zielgröße kann auch eine Leistungsfähigkeit (auch als Performanz bezeichnet) des Neuronalen Netzes sein. Einfach ausgedrückt kann die Rangfolge derart bestimmt und/oder angepasst werden, dass sämtliche vorgesehenen Zielgrößen bei der Auswahl der zu prunenden Elemente bzw. Filter des Neuronalen Netzes berücksichtigt werden.

In einer Ausführungsform ist vorgesehen, dass das Bestimmen der Aktivierungsdifferenzen und/oder das Prunen auf ausgewählte Schichten des Neuronalen Netzes beschränkt ist. Hierdurch können Schichten, die beispielsweise einer Merkmalsextraktion dienen, vom Prunen ausgeschlossen werden. Vor allem für Neuronale Netze, die verschiedene Aufgaben erfüllen (Multi-task-learning) oder deren Aufgabenerfüllung in verschiedene Teilschritte zerfällt, lässt sich das Prunen so auf bestimmte Teilaufgaben konzentrieren. Ein Beispiel hierfür liegt in Region-Proposal-Netzwerken, die für die Objekterkennung zuerst relevante Bildausschnitte identifizieren und diese nachfolgend klassifizieren und bewerten. Hierbei kann es zielführend sein, das Prunen auf die Klassifikation zu konzentrieren, um ein durch das Prunen ausgelöstes Übersehen relevanter Bildbereiche zu verhindern.

In einer Ausführungsform ist vorgesehen, dass das Neuronale Netz im Anschluss an das Prunen nachtrainiert wird. Hierdurch kann eine funktionale Güte des geprunten bzw. komprimierten Neuronalen Netzes verbessert werden. Hierbei muss kein vollständiges Training durchgeführt werden. Es kann hingegen vorgesehen sein, dass das geprunte bzw. komprimierte Neuronale Netz nur mit einem Teil von ursprünglich zum Trainieren verwendeten Trainingsdaten nachtrainiert wird.

In einer Ausführungsform ist vorgesehen, dass die Elemente zum Prunen zumindest vorerst deaktiviert werden. Hierzu werden Parameter des zu prunenden Elementes beispielsweise auf Null gesetzt, sodass das Element in dem Neuronalen Netz keinen Einfluss mehr auf ein Ergebnis in der nachfolgenden Schicht bzw. der Ausgangsschicht des Neuronalen Netzes hat. Dies hat den Vorteil, dass das Deaktivieren gegenüber einem Entfernen eines Elementes des Neuronalen Netzes leichter wieder rückgängig gemacht werden kann. Stellt sich nach dem Deaktivieren eines Elements beispielsweise heraus, dass eine funktionale Güte des Neuronalen Netzes zu stark beeinträchtigt ist, so kann das Element wieder aktiviert werden. Insbesondere kann das wieder aktivierte Element anschließend markiert werden, sodass es bei nachfolgenden Durchläufen des Verfahrens nicht erneut deaktiviert und/oder geprunt wird. In einem späteren Schritt kann das deaktivierte Element entfernt werden, das heißt eine Struktur des Neuronalen Netzes wird angepasst. Dies erfolgt insbesondere, wenn eine funktionale Güte oder sonstige Zielgrößen trotz des deaktivierten Elements erreicht werden.

In einer Ausführungsform ist vorgesehen, dass das Prunen erst erfolgt, wenn mindestens ein Auslösekriterium erfüllt ist. Hierdurch kann das Prunen immer dann erfolgen, wenn ein bestimmter Zustand erreicht ist. Insbesondere ein stetes bzw. zu häufiges Prunen und/oder eine zu stark variierende Auswahl der zu prunenden Elemente des Neuronalen Netzes können hierdurch verhindert werden. Das Auslösekriterium kann beispielsweise eine vorgegebene Anzahl von Elementen in der Rangfolge sein. Ferner kann das Auslösekriterium zusätzlich oder alternativ auch eine Konvergenz der Rangfolge sein. Konvergenz der Rangfolge bedeutet hierbei, dass sich die Elemente in der bestimmten Rangfolge über eine vorgegebene Anzahl an Durchläufen des Verfahrens oder eine vorgegebene Zeitdauer zumindest für eine vorgegebene Anzahl an Rängen nicht mehr verändert.

Es ist vorgesehen, dass das Neuronale Netz eine Umfelderkennung durchführt. Das Neuronale Netz dient beispielsweise einer Objekterkennung (z.B. Klassifizierung und Schätzen einer Bounding Box eines Objektes) im Umfeld des Kraftfahrzeugs oder dem Durchführen einer semantischen Segmentierung von erfassten Sensordaten, insbesondere Kameradaten.

Weiter wird insbesondere auch ein Kraftfahrzeug geschaffen, umfassend mindestens eine Vorrichtung gemäß einer der beschriebenen Ausführungsformen.

In einer Ausführungsform des Kraftfahrzeugs ist vorgesehen, dass das Kraftfahrzeug eine Umfeldsensorik zum Erfassen von Umfelddaten umfasst, wobei die Umfeldsensorik und die mindestens eine Vorrichtung dazu eingerichtet sind, dass die erfassten Umfelddaten als zeitlich sich ändernde Eingangsdaten dem Neuronalen Netz zugeführt werden. Die Umfeldsensorik umfasst insbesondere eine Umfeldkamera, die Kamerabilder vom Umfeld des Kraftfahrzeugs erfasst und als Videosequenz aus Videoeinzelbildern bereitstellt. Die bereitgestellte Videosequenz bildet die zeitlich sich ändernden Eingangsdaten des Neuronalen Netzes.

Nachfolgend wird die Erfindung anhand bevorzugter Ausführungsbeispiele unter Bezugnahme auf die Figuren näher erläutert. Hierbei zeigen:

Fig. 1  eine schematische Darstellung einer Ausführungsform der Vorrichtung zum Ausführen des Verfahrens;

Fig. 2  ein schematisches Ablaufdiagramm einer Ausführungsform des Verfahrens zum Komprimieren eines Neuronalen Netzes;

Fig. 3  eine schematische Darstellung einer Ausführungsform des Kraftfahrzeugs.

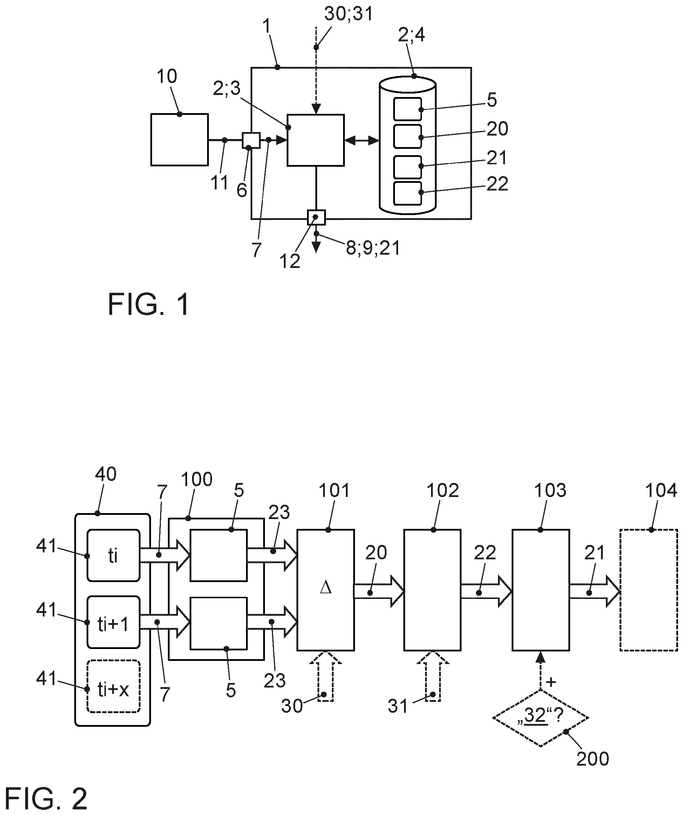

In Fig. 1 ist eine schematische Darstellung einer Vorrichtung 1 zum Ausführen des Verfahrens gezeigt. Die Vorrichtung 1 umfasst Mittel 2 zum Ausführen der Verfahrensschritte des Verfahrens. Die Mittel 2 umfassen eine Recheneinrichtung 3 und einen Speicher 4. Zum Durchführen der Verfahrensschritte kann die Recheneinrichtung 3 auf den Speicher 4 zugreifen und in diesem Rechenoperationen durchführen.

In dem Speicher 4 sind eine Struktur und Parameter von Elementen eines Neuronalen Netzes 5 abgelegt. Das Neuronale Netz 5 ist insbesondere ein Faltungsnetz, wobei die Elemente als Filter ausgebildet sind. Es ist vorgesehen, dass das Neuronale Netz 5 eine Umfelderkennung durchführt.

Der Vorrichtung 1 werden über eine Eingangsschnittstelle 6 Kameradaten 11 einer Kamera 10 als Eingangsdaten 7 zugeführt. Das Neuronale Netz 5 dient beispielsweise zum Erkennen von Objekten in den erfassten Kameradaten 11 bzw. Eingangsdaten 7. Als Ausgangsdaten 8 liefert das Neuronale Netz 5 nach dem Inferieren beispielsweise Schätzwerte für das Vorliegen bestimmter Objekte oder Objektklassen und deren jeweiliger Position (bounding box) in den Kameradaten 11 bzw. Eingangsdaten 7. Die Ausgangsdaten 8 werden an einer Ausgangsschnittstelle 12 in Form eines Ausgangssignals 9 bereitgestellt, beispielsweise als digitales Datenpaket oder digitaler Datensatz.

Während einer Inferenzphase werden zeitlich sich ändernde Eingangsdaten 7 dem Neuronalen Netz 5 zugeführt. Im Falle der Kameradaten 11 sind die Eingangsdaten 7 beispielsweise einzelne Videoeinzelbilder (engl. Frames) eines Videodatenstroms der Kamera 10. Eine zeitliche Änderung ergibt sich hierbei von Videoeinzelbild zu Videoeinzelbild des Videodatenstroms. Ausgehend von diesen Eingangsdaten 7 werden zeitliche Aktivierungsdifferenzen 20 von Elementen des Neuronalen Netzes 5 für zeitlich benachbarte Eingangsdaten 7, insbesondere zwischen zeitlich benachbarten Videoeinzelbildern, während der Inferenzphase bestimmt.

In Abhängigkeit der bestimmten zeitlichen Aktivierungsdifferenzen 20 wird das Neuronale Netz 5 geprunt. Insbesondere kann das Prunen hierbei auf Grundlage von gemittelten Aktivierungsdifferenzen 20 erfolgen. Es kann vorgesehen sein, dass das geprunte Neuronale Netz 21 anschließend an der Ausgangsschnittstelle 12 ausgegeben wird, beispielsweise in Form eines Datensatzes, der eine Struktur und Parameter des geprunten Neuronalen Netzes 21 beschreibt. Insbesondere ist vorgesehen, dass das Neuronale Netz 5 im Speicher 4 durch das geprunte Neuronale Netz 21 ersetzt wird.

Es kann vorgesehen sein, dass zumindest ein Teil der bestimmten zeitlichen Aktivierungsdifferenzen 20 in Abhängigkeit von mindestens einem Einflussparameter 30 bestimmt wird.

Es kann vorgesehen sein, dass die zeitlichen Aktivierungsdifferenzen 20 relativ zu zeitlichen Aktivierungsdifferenzen 20 einer vorausgehenden Netzschicht und/oder von zeitlichen Veränderungen der Eingangsdaten 7 bzw. eines Eingangsdatenstroms bestimmt werden.

Es kann ferner vorgesehen sein, dass auf Grundlage der bestimmten zeitlichen Aktivierungsdifferenzen 20 eine Rangfolge 22 der Elemente erstellt wird, wobei das Prunen in Abhängigkeit der erstellten Rangfolge 22 durchgeführt wird. Das Erstellen der Rangfolge 22 erfolgt mittels der Recheneinrichtung 3, welche die bestimmten zeitlichen Aktivierungsdifferenzen 20 hierzu der Größe nach sortiert. Hierbei ist insbesondere vorgesehen, dass die Rangfolge 22 auf Grundlage von Mittelwerten der zeitlichen Aktivierungsdifferenzen 20 der einzelnen Elemente des Neuronalen Netzes 5 erstellt wird. Hierbei können die Mittelwerte auf Grundlage eines arithmetischen Mittels, eines zeitlichen Mittels oder eines geometrischen Mittels berechnet werden.

Es kann vorgesehen sein, dass die Rangfolge 22 unter Berücksichtigung mindestens einer Zielgröße 31 erstellt wird.

Es kann vorgesehen sein, dass das Bestimmen der zeitlichen Aktivierungsdifferenzen 20 und das Prunen auf ausgewählte Schichten des Neuronalen Netzes 5 beschränkt ist.

Weiter kann vorgesehen sein, dass das Neuronale Netz 5 im Anschluss an das Prunen nachtrainiert wird, das heißt das geprunte Neuronale Netz 21 wird nachtrainiert. Das Nachtrainieren wird beispielsweise mittels der Recheneinrichtung 3 durchgeführt, kann jedoch auch auf einer anderen Einrichtung durchgeführt werden. Das Nachtrainieren erfolgt insbesondere mit einem gegenüber einem ursprünglichen Trainingsdatensatz verringerten Trainingsdatensatz, sodass das Nachtrainieren weniger Rechenzeit benötigt als ein initiales Training des Neuronalen Netzes 5.

Es kann vorgesehen sein, dass die Elemente des Neuronalen Netzes 5 zum Prunen zumindest vorerst deaktiviert werden. Die Recheneinrichtung 3 deaktiviert hierzu einzelne Elemente des Neuronalen Netzes 5, insbesondere indem entsprechende Gewichte und Parameter des Elementes so verändert werden, dass das Element keinen Einfluss mehr auf das am Ausgang des Neuronalen Netzes 5 inferierte Ergebnis hat. Hierdurch kann insbesondere ein Nachtrainieren erfolgen, bevor eine Struktur des Neuronalen Netzes 5 angepasst ist bzw. angepasst wird. Dies ermöglicht insbesondere eine Rückkehr zu einem vorherigen Zustand des Neuronalen Netzes 5. Insbesondere kann hierdurch ein Effekt des Prunens getestet bzw. abgeschätzt werden. Hat das Prunen beispielsweise einen zu starken Einfluss auf die Leistungsfähigkeit (Performanz) des Neuronalen Netzes 5, so kann das deaktivierte Element wieder aktiviert werden. Es kann vorgesehen sein, dass das erneut aktivierte Element anschließend für weitere Durchläufe des Verfahrens markiert wird, sodass es vom Prunen ausgeschlossen ist.

Es kann vorgesehen sein, dass das Prunen erst erfolgt, wenn mindestens ein Auslösekriterium erfüllt ist. Das Auslösekriterium kann beispielsweise eine vorgegebene Anzahl von Elementen in der Rangfolge 22 sein. Ferner kann das Auslösekriterium zusätzlich oder alternativ auch eine Konvergenz der Rangfolge 22 sein. Konvergenz der Rangfolge 22 bedeutet hierbei, dass sich die Elemente in der bestimmten Rangfolge 22 über eine vorgegebene Anzahl an Durchläufen des Verfahrens oder eine vorgegebene Zeitdauer zumindest für eine vorgegebene Anzahl an Rängen nicht mehr verändert.

In Fig. 2 ist ein schematisches Flussdiagramm einer Ausführungsform des Verfahrens zum Komprimieren eines Neuronalen Netzes 5 gezeigt. Das Verfahren wird beispielsweise auf einer Vorrichtung zur Datenverarbeitung ausgeführt, welche beispielsweise wie die in der Fig. 1 gezeigte Ausführungsform ausgebildet ist. Das Flussdiagramm wird am Beispiel von Eingangsdaten 7 erläutert, die in Form eines aus Videoeinzelbildern 41 (Frames) bestehenden Videos 40 bereitgestellt werden. Die Videoeinzelbilder 41 korrespondieren hierbei jeweils mit einem Zeitpunkt $t_i$.

In einem Verfahrensschritt 100 werden die Videoeinzelbilder 41 dem Neuronalen Netz 5 zugeführt. Dies ist für zwei benachbarte Zeitschritte gezeigt, das heißt für ein Videoeinzelbild 41, das mit dem Zeitpunkt $t_i$ korrespondiert, und für ein Videoeinzelbild 41, das mit dem darauffolgenden Zeitpunkt $t_{i+1}$ korrespondiert. Das Neuronale Netz 5 wird auf die Videoeinzelbilder 41 angewandt und inferiert ein Ergebnis an Ausgängen einer Ausgangsschicht des Neuronalen Netzes 5. Das Ergebnis kann beispielsweise eine Objekterkennung bzw. -klassifikation und/oder das Erstellen von Bounding Boxes für die erkannten Objekte umfassen. Beim Inferieren werden Werte für Aktivierungen 23 von Elementen des Neuronalen Netzes 5 erfasst bzw. ausgelesen. Ist das Neuronale Netz 5 als Faltungsnetz ausgebildet, so entsprechen die Aktivierungen 23 den jeweiligen Werten an Ausgängen von Filtern des Faltungsnetzes. Das Ergebnis wird beispielsweise jeweils als Liste bereitgestellt, in der zu jedem Element des Neuronalen Netzes 5 die zugehörige Aktivierung 23 für die betrachteten Zeitpunkte $t_i$ und $t_{i+1}$ hinterlegt ist.

In einem Verfahrensschritt 101 wird aus den Werten für die Aktivierungen 23 der einzelnen Elemente eine zeitliche Aktivierungsdifferenz 20 für die beiden betrachteten Zeitpunkte $t_i$ und $t_{i+1}$ bestimmt. Dies erfolgt elementeweise für alle Elemente des Neuronalen Netzes 5. Hierbei wird insbesondere ein Betrag einer Differenz zwischen den Werten der Aktivierung 23 der einzelnen Elemente betrachtet. Für jedes der Elemente des Neuronalen Netzes 5 steht anschließend eine Aktivierungsdifferenz 20 in Bezug auf die zwei Zeitpunkte $t_i$ und $t_{i+1}$ zur Verfügung. Das Ergebnis wird beispielsweise als Liste bereitgestellt, in der zu jedem Element des Neuronalen Netzes 5 die bestimmte zeitliche Aktivierungsdifferenz 20 für die betrachteten Zeitpunkte $t_i$ und $t_{i+1}$ hinterlegt ist.

Es kann vorgesehen sein, dass die zeitlichen Aktivierungsdifferenzen 20 gemittelt werden und die nachfolgend beschriebenen Verfahrensschritte ausgehend von den gemittelten Aktivierungsdifferenzen 20 durchgeführt werden.

Es kann vorgesehen sein, dass zumindest ein Teil der bestimmten zeitlichen Aktivierungsdifferenzen 20 in Abhängigkeit von mindestens einem Einflussparameter 30 bestimmt wird. Beispielsweise kann eine Geschwindigkeit (bereitgestellt z.B. über einen GPS-Sensor), ein aktuelles Wetter (bereitgestellt z.B. über einen Regensensor) und/oder ein Lenkwinkel (bereitgestellt z.B. über einen Lenkwinkelsensor) dazu verwendet werden, eine bestimmte zeitliche Aktivierungsdifferenz 20 situationsbedingt zu verstärken oder abzuschwächen.

In einem Verfahrensschritt 102 werden die bestimmten zeitlichen Aktivierungsdifferenzen 20 der Größe nach sortiert. Es entsteht hierdurch eine Rangfolge 22, in der die Elemente des Neuronalen Netzes 5 mit den größten zeitlichen Aktivierungsdifferenzen 20 die oberen Ränge belegen.

Es kann vorgesehen sein, dass die Rangfolge 22 unter Berücksichtigung mindestens einer Zielgröße 31 erstellt wird. Die mindestens eine Zielgröße 31 kann beispielsweise eine Robustheit des Neuronalen Netzes 5 betreffen. Ferner können Elemente bzw. Filter, die innerhalb des Neuronalen Netzes 5 einen größeren Einfluss haben, trotz einer großen zeitlichen Aktivierungsdifferenz 20 beibehalten werden. Auch können Elemente bzw. Filter, die einer Funktionalität nach anderen Elementen bzw. Filtern gleichen (z.B. Filter, die Kameradaten 11 im Wege einer Faltung mit einer Filterfunktion filtern), in der Rangfolge 22 nach vorne verschoben werden, das heißt beim Prunen bzw. beim Entfernen bevorzugt werden. Hingegen können Elemente bzw. Filter, die anderen Elementen bzw. Filtern nicht ähneln, in der Rangfolge 22 nach hinten verschoben werden, das heißt weniger bevorzugt gelöscht werden. Weitere Zielgrößen 31 können pluralitätsorientiert sein, das heißt dafür sorgen, dass viele verschiedene Merkmale in den Eingangsdaten 7 erkannt bzw. herausgefiltert werden. Entsprechend wird eine bestimmte Rangfolge 22 dahingehend angepasst, dass weiterhin viele verschiedene Merkmale bzw. eine Mindestanzahl an unterschiedlichen Merkmalen erkannt bzw. herausgefiltert werden. Eine weitere Zielgröße 31 kann auch eine Leistungsfähigkeit (Performanz) des Neuronalen Netzes 5 sein.

Es kann vorgesehen sein, dass die Elemente zum Prunen zumindest vorerst deaktiviert werden. In einem nachfolgenden Verfahrensschritt, beispielsweise nach einem erfolgreichen Nachtrainieren, kann das Neuronale Netz 5 dann geprunt werden.

In einem Verfahrensschritt 103 wird das Neuronale Netz 5 geprunt, indem Elemente des Neuronalen Netzes 5 mit den größten zeitlichen Aktivierungsdifferenzen 20 gemäß der Rangfolge 22 aus der Struktur des Neuronalen Netzes 5 entfernt werden. Als Ergebnis wird ein gepruntes Neuronales Netz 21 bereitgestellt.

Es kann vorgesehen sein, dass in einem Verfahrensschritt 200 vorher geprüft wird, ob mindestens ein Auslösekriterium 32 erfüllt ist. Erst wenn das Auslösekriterium 32 erfüllt ist, wird das Prunen des Neuronale Netzes 5 durchgeführt.

Es kann in einem Verfahrensschritt 104 zur Erhöhung einer funktionalen Güte des geprunten Neuronalen Netzes 21 vorgesehen sein, dass das geprunte Neuronale Netz 21 nachtrainiert wird.

Die beschriebenen Verfahrensschritte 100-104 werden für weitere Zeitpunkte $t_{i+x}$ durchgeführt. Es ist insbesondere vorgesehen, dass das Prunen in Verfahrensschritt 103 auf Grundlage einer Rangfolge 22 durchgeführt wird, die für Mittelwerte der zeitlichen Aktivierungsdifferenzen 20 erstellt wurde. Hierbei wird insbesondere über mehrere Zeitpunkte ti gemittelt.

Es ist insbesondere vorgesehen, dass die Verfahrensschritte 100-104 zyklisch wiederholt werden, wobei jeweils aktuelle Eingangsdaten 7 verwendet werden. Insbesondere ist vorgesehen, dass die Verfahrensschritte 100-104 unter Verwendung des (nachtrainierten) geprunten Neuronalen Netzes 21 wiederholt werden, wobei das Neuronale Netz 5 hierzu gegen das (nachtrainierte) geprunte Neuronale Netz 21 ausgetauscht wird.

Durch das Verfahren kann das Neuronale Netz 5 komprimiert werden, wobei sich gleichzeitig eine Stabilität erhöht, da instabile Elemente des Neuronalen Netzes 5 entfernt bzw. deaktiviert werden.

Nachfolgend wird eine Ausführungsform des Verfahrens mit Hilfe eines mathematischen Beispiels verdeutlicht. Es wird hierbei davon ausgegangen, dass die Eingangsdaten aus einer Videosequenz aus Videoeinzelbildern bestehen. Je nach Anzahl der Videoeinzelbilder pro Zeiteinheit (z.B. Frames pro Sekunde) ergeben sich nur geringe Änderungen in benachbarten Videoeinzelbildern. Dies macht sich das Verfahren zunutze und verwendet dies zum stabilitätsbasierten Pruning des Neuronalen Netzes. Das Verfahren wird insbesondere auf ein gut trainiertes Neuronales Netz, insbesondere ein Convolutional Neuronal Network (CNN), angewendet. Als Elemente des Neuronalen Netzes werden insbesondere Filter des CNN betrachtet. Hierbei werden Filter (auch als Filterkerne bezeichnet), deren Aktivierungen bei benachbarten Videoeinzelbildern, das heißt bei zeitlich sich ändernden Eingangsdaten, eine große Änderung in der Aktivierung zeigen (das heißt bei denen eine zeitliche Aktivierungsdifferenz groß ist) als instabil betrachtet. In der Ausführungsform des Verfahrens werden solche Filter in einer Rangfolge höher gewertet. Als Eingangsdaten werden nur unmarkierte (ungelabelte) Eingangsdaten benötigt, beispielsweise Videoeinzelbilder einer Videosequenz, die mit einer Kamera zum Erfassen eines Umfelds eines Kraftfahrzeugs erfasst wurden.

Eine (Faltungs-)Schicht umfasst insbesondere mehrere Filter (auch als Filterkerne bezeichnet), wobei jeder Filter insbesondere eine gesamte Ausgabe einer vorangehenden Schicht erhält und jeder Filter eine zugehörige Merkmalskarte (engl. feature map) als Ausgabe bereitstellt.

Für ein Videoeinzelbild in einem sequentiellen Datensatz (Videosequenz) mit einer Höhe H, einer Breite $W$, Kanälen $C$ und einem Zeitpunkt $t$, mit $t \in \mathbb{N}: [1 \ldots T]$, wird $x_t \in G^{H \times W \times C}$ als Videoeinzelbild eines Datensatzes $\chi$ definiert, wobei $G = \{0 \leq z \leq 255 | z \in \mathbb{N}\}$. Das Videoeinzelbild $x_t$ ist die Eingabe (das heißt entspricht den Eingangsdaten am Eingang) eines Neuronalen Netzes $\mathfrak{F}(\cdot, \theta)$, wobei $\theta$ Parameter des Neuronalen Netzes sind. Dieses Neuronale Netz $\mathfrak{F}(\cdot, \theta)$ umfasst $L \in \mathbb{N}$ (Faltungs-)Schichten, deren Ausgänge $\Psi_l(\cdot) \in \mathbb{R}^{H_l \times W_l \times k_l}$ sind, mit einer Höhe $H_l$, einer Breite $W_l$ und einer Anzahl von Merkmalskarten $k_l$ für $l \in \{1, \ldots, L\}$.

Mit $\Psi_{l,j}$ wird die j-te Merkmalskarte (feature map) des Ausgangs der Schicht $l$ bezeichnet, das heißt die zum Filter $j$ der Schicht l zugehörige Merkmalskarte, wobei $j \in \{1, \ldots, k_l\}$. Als Satz aller Merkmalskarten in dem Neuronalen Netz zu einem Zeitpunkt $t$ kann dann $\mathcal{F}_t = \{\Psi_{l,j}\} \, \forall \, l = \{1, \ldots, L\}, j = \{1, \ldots, k_l\}$ definiert werden.

Eine Stabilität ist insbesondere definiert als eine Änderung der Ausgabe $\Psi_{l,j}$ (Aktivierungsdifferenz) in Bezug auf eine Änderung der zugehörigen Eingabe $xt$, das heißt es ergibt sich für ein Filter $j$ in der Schicht $l$ und einen Zeitpunkt $t$ eine Rangfolgenfunktion *rank*:

$$rank(l, j, t) = \left| \frac{\partial \Psi_{l,j}(x_t)}{\partial x_t} \right| \qquad (1)$$

mit

$$|\cdot|: \, \mathbb{R}^{H_l \times W_l} \to \mathbb{R}_{\geq 0}$$

Einfach ausgedrückt, ist eine Instabilität umso größer, je größer ein resultierender Wert der Rangfolgenfunktion für einen betrachteten Filter ist. Die Rangfolgenfunktion wird insbesondere für jedes Element des Neuronalen Netzes, im aktuellen Beispiel also für jeden Filter, bestimmt.

Die Änderungen in den Ausgaben $\Psi_{l,j}(x_t)$, das heißt in den Aktivierungen der Filter, können zwei Ursachen haben. Erstens kann eine Änderung am Ausgang durch eine Änderung im Videoeinzelbild $x_t$ am Eingang hervorgerufen werden. Zweitens kann eine Änderung auch durch eine Änderung der Aktivierungen am Ausgang einer voranstehenden Schicht $\psi_{l-1}(x_t)$ hervorgerufen werden.

Um eine Differenz zwischen aufeinanderfolgenden Videoeinzelbildern (d.h. zeitlich benachbarten Eingangsdaten) zu berechnen, kann beispielsweise der an sich bekannte Index der Strukturellen Ähnlichkeit (Structural Similarity Index, SSIM) verwendet werden. Der SSIM wird zur Messung einer Ähnlichkeit zwischen zwei Bildern verwendet.

$$\Delta x_t = 1 - SSIM(x_t, x_{t-1}) \qquad (2)$$

Da die Stabilität von $\Psi_{l,j}$ auch von einer Stabilität der Ausgänge (Aktivierungen) von $\psi_{l-1}$ abhängt, sollte verhindert werden, dass ein Filter in der Schicht $l$ aufgrund einer Instabilität in der Schicht $l$ - 1 geprunt wird. Daher wird der Beitrag der voranstehenden Schicht in der Rangfolgenfunktion berücksichtigt. $\mathcal{D}_{l,t}$ ist die normalisierte Ausgabe der l-ten Schicht zur nachfolgenden Schicht zum Zeitpunkt $t$. Diese wird in der nachfolgenden Gleichung berechnet. Um die Änderungen der Ausgaben (Aktivierungen) der Filter im gesamten Neuronalen Netz miteinander vergleichen zu können, werden die Ausgaben (Aktivierungen) normalisiert mit einer Höhe $H_l$, einer Breite $W_l$ und einer Anzahl $k_l$ von Kanälen (Merkmalkarten, engl. feature maps) der Schicht $l$.

$$\mathcal{D}_{l,t} = \left| \frac{\psi_l(x_t) - \psi_l(x_{t-1})}{H_l \times W_l \times k_l} \right| \qquad (3)$$

Um für jeden Filter dessen stabilitätsbasierten Rang zu berechnen, werden die Gleichungen (2) und (3) mit der Gleichung (1) kombiniert. Der Rang ist hierbei definiert als $R_{l,j}^a$, wobei $a \in \mathbb{N}: [1, \ldots, A]$ eine Videosequenz ist. Gleichung (4) definiert den Rang als eine über alle Zeitpunkte $t$ (d.h. über eine Anzahl T von Videoeinzelbildern) gemittelte (zeitliche) Aktivierungsdifferenz mit Bezug auf eine Änderung an den Eingängen der Filter, das heißt mit Bezug auf eine (zeitliche) Änderung der Eingangsdaten:

$$R_{l,j}^a = \sum_{t=1}^{T} \frac{1}{T} \left| \frac{\Psi_{l,j}(x_t) - \Psi_{l,j}(x_{t-1})}{\Delta x_t + \lambda \left( \mathcal{D}_{l-1,t} \times H_l \times W_l \right)} \right| \qquad (4)$$

$\lambda$ ist hierbei ein Gewichtungsfaktor, mit dem ein Einfluss der voranstehenden Schicht eingestellt werden kann. Hierbei wird der Einfluss der voranstehenden Schicht mit einer Größe $H_l \times W_l$ der jeweils betrachteten Schicht $l$ gewichtet.

Hieraus werden Mittelwerte bestimmt, das heißt der Rang $R_{l,j}^a$ wird über mehrere unmarkierte (ungelabelte) Videosequenzen A zusammengefasst und (arithmetisch) gemittelt, wie in Gleichung (5) gezeigt.

$$R_{l,j} = \frac{1}{A} \sum_{a=1}^{A} R_{l,j}^a \qquad (5)$$

Größere Werte von $R_{l,j}$ bedeuten jeweils eine größere Instabilität des betrachteten Filters (j-ter Filter in der l-ten Schicht). Es ist möglich, beim Mitteln andere Verfahren zu verwenden, z.B. momentenbasierte Mittelungsverfahren oder auch Mittelungsverfahren, bei denen einzelne Aktivierungsdifferenzen jeweils gewichtet berücksichtigt werden.

Das Neuronale Netz wird entsprechend der über die Rangfolgenfunktion für die einzelnen Filter bestimmten Rangfolge geprunt, beispielsweise werden die Filter in den oberen (5, 10, 20,...etc.) Rängen aus dem Neuronalen Netz entfernt, da diese die instabilsten Filter bzw. Elemente des Neuronalen Netzes sind.

Das mathematische Beispiel bezieht sich auf eine Videosequenz bzw. Videoeinzelbilder als Eingangsdaten. Prinzipiell ist das Vorgehen bei einer anderen Art von Eingangsdaten jedoch analog.

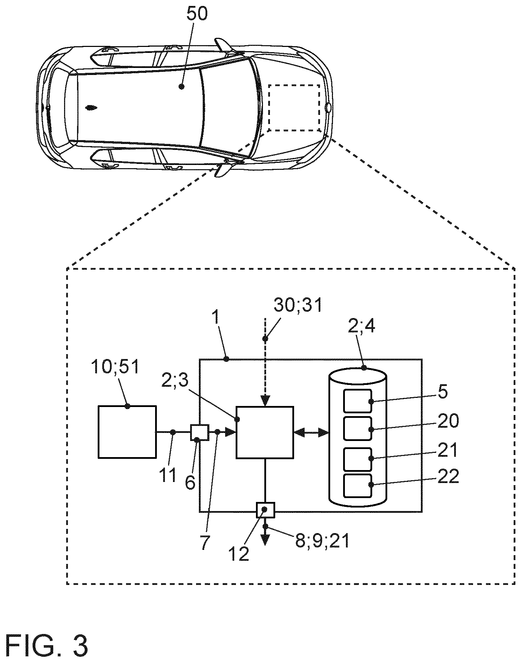

In Fig. 3 ist eine schematische Darstellung einer Ausführungsform des Kraftfahrzeugs 50 gezeigt. Das Kraftfahrzeug 50 umfasst eine Vorrichtung 1, die beispielsweise wie die in der Fig. 1 beschriebene Ausführungsform ausgebildet ist. Das Kraftfahrzeug 50 umfasst ferner eine Umfeldsensorik 51 zum Erfassen von Umfelddaten. Die Umfeldsensorik 51 ist beispielsweise eine Kamera 10, die Kameradaten 11 als Umfelddaten erfasst. Die Kameradaten 11 werden mittels der Eingangsschnittstelle 6 als zeitlich sich ändernde Eingangsdaten 7 dem Neuronalen Netz 5 zugeführt. Ansonsten entspricht die Vorrichtung 1 den bereits in der Fig. 1 beschriebenen Ausgestaltungen.

Es ist insbesondere vorgesehen, dass das Neuronale Netz 5 eine Umfelderkennung durchführt und/oder eine automatisierte Fahrfunktion eines Kraftfahrzeugs 50 unterstützt.

**Bezugszeichenliste**

| | |
|---|---|
| 1 | Vorrichtung |
| 2 | Mittel |
| 3 | Recheneinrichtung |
| 4 | Speicher |
| 5 | Neuronales Netz |
| 6 | Eingangsschnittstelle |
| 7 | Eingangsdaten |
| 8 | Ausgangsdaten |
| 9 | Ausgangssignal |
| 10 | Kamera |
| 11 | Kameradaten |
| 12 | Ausgangsschnittstelle |
| 20 | zeitliche Aktivierungsdifferenz |
| 21 | gepruntes Neuronales Netz |
| 22 | Rangfolge |
| 23 | Aktivierung |
| 30 | Einflussparameter |
| 31 | Zielgröße |
| 32 | Auslösekriterium |
| 40 | Video |
| 41 | Videoeinzelbild |
| 50 | Kraftfahrzeug |
| ti | Zeitpunkt |

ti+1      Zeitpunkt
ti+x      weiterer Zeitpunkt
100-104   Verfahrensschritte

**Patentansprüche**

1.  Computerimplementiertes Verfahren zum Komprimieren eines Neuronalen Netzes (5), wobei das Neuronale Netz (5) eine Umfelderkennung eines Kraftfahrzeugs (50) durchführt, wobei dem Neuronalen Netz (5) zeitlich sich ändernde Eingangsdaten (7) zugeführt werden, wobei die Eingangsdaten (7) Sensordaten sind, wobei die Sensordaten von einer Umfeldsensorik des Kraftfahrzeugs (50) erfasst wurden, wobei zeitliche Aktivierungsdifferenzen (20) von Elementen des Neuronalen Netzes (5) für zeitlich benachbarte Eingangsdaten (7) bestimmt werden, wobei eine zeitliche Aktivierungsdifferenz (20) eine Differenz ist, die aus Aktivierungen bzw. Werten eines Ausgangs bestimmt wird, die von einem jeweiligen Element des Neuronalen Netzes (5) zu benachbarten Zeitpunkten inferiert werden, und wobei die bestimmten zeitlichen Aktivierungsdifferenzen (20) bereitgestellt werden, um das Neuronale Netz (5) in Abhängigkeit der bestimmten zeitlichen Aktivierungsdifferenzen (20) zu prunen, und wobei das Neuronale Netz (5) in Abhängigkeit der bestimmten zeitlichen Aktivierungsdifferenzen (20) geprunt wird.

2.  Verfahren nach Anspruch 1, **dadurch gekennzeichnet, dass** zumindest ein Teil der bestimmten Aktivierungsdifferenzen (20) in Abhängigkeit von mindestens einem Einflussparameter (30) bestimmt wird.

3.  Verfahren nach einem der voranstehenden Ansprüche, **dadurch gekennzeichnet, dass** auf Grundlage der bestimmten zeitlichen Aktivierungsdifferenzen (20) eine Rangfolge (22) der Elemente erstellt wird, um das Prunen in Abhängigkeit der erstellten Rangfolge (22) durchzuführen.

4.  Verfahren nach Anspruch 3, **dadurch gekennzeichnet, dass** die Rangfolge (22) derart bestimmt wird, dass die Elemente des Neuronalen Netzes (5) mit den größten zeitlichen Aktivierungsdifferenzen (20) geprunt werden.

5.  Verfahren nach Anspruch 3 oder 4, **dadurch gekennzeichnet, dass** die Rangfolge (22) unter Berücksichtigung mindestens einer Zielgröße (31) erstellt wird.

6.  Verfahren nach einem der vorangegangenen Ansprüche, **dadurch gekennzeichnet, dass** das Bestimmen der Aktivierungsdifferenzen (20) und/oder das Prunen auf ausgewählte Schichten des Neuronalen Netzes (5) beschränkt ist.

7.  Verfahren nach einem der vorangegangenen Ansprüche, **dadurch gekennzeichnet, dass** das Neuronale Netz (5) im Anschluss an das Prunen nachtrainiert wird.

8.  Verfahren nach einem der vorangegangenen Ansprüche, **dadurch gekennzeichnet, dass** die Elemente zum Prunen zumindest vorerst deaktiviert werden.

9.  Vorrichtung (1) zur Datenverarbeitung, umfassend Mittel (2) zur Ausführung des Verfahrens nach einem beliebigen der Ansprüche 1 bis 8, wobei die Mittel (2) eine Recheneinrichtung (3) und eine Speichereinrichtung (4) umfassen.

10. Kraftfahrzeug (50), umfassend mindestens eine Vorrichtung (1) nach Anspruch 9.

11. Kraftfahrzeug (50) nach Anspruch 10, **dadurch gekennzeichnet, dass** das Kraftfahrzeug (50) eine Umfeldsensorik (51) zum Erfassen von Umfelddaten umfasst, wobei die Umfeldsensorik (51) und die mindestens eine Vorrichtung (1) dazu eingerichtet sind, dass die erfassten Umfelddaten als zeitlich sich ändernde Eingangsdaten (7) dem Neuronalen Netz (5) zugeführt werden.

12. Computerprogramm, umfassend Befehle, die bei der Ausführung des Computerprogramms durch einen Computer diesen veranlassen, das Verfahren nach einem beliebigen der Ansprüche 1 bis 8 auszuführen.

13. Datenträgersignal, das das Computerprogramm nach Anspruch 12 überträgt.

**EP 4 026 063 B1**

**Claims**

1. Computer-implemented method for compressing a neural network (5), wherein the neural network (5) carries out detection of the surroundings of a motor vehicle (50), wherein temporally varying input data (7) are supplied to the neural network (5), wherein the input data (7) are sensor data, wherein the sensor data were acquired by a surroundings sensor system of the motor vehicle (50), wherein temporal activation differences (20) of elements of the neural network (5) are determined for temporally adjacent input data (7), wherein a temporal activation difference (20) is a difference determined from activations or values of an output which are inferred by a relevant element of the neural network (5) at adjacent points in time, and wherein the determined temporal activation differences (20) are provided in order to prune the neural network (5) according to the determined temporal activation differences (20), and wherein the neural network (5) is pruned according to the determined temporal activation differences (20).

2. Method according to claim 1, **characterized in that** at least some of the determined activation differences (20) are determined on the basis of at least one influencing parameter (30).

3. Method according to either of the preceding claims, **characterized in that,** on the basis of the determined temporal activation differences (20), a ranking (22) of the elements is created in order to carry out the pruning according to the created ranking (22).

4. Method according to claim 3, **characterized in that** the ranking (22) is determined such that the elements of the neural network (5) that have the largest temporal activation differences (20) are pruned.

5. Method according to claim 3 or claim 4, **characterized in that** the ranking (22) is created taking into account at least one target variable (31).

6. Method according to any of the preceding claims, **characterized in that** determining the activation differences (20) and/or pruning is restricted to selected layers of the neural network (5).

7. Method according to any of the preceding claims, **characterized in that** the neural network (5) is retrained following pruning.

8. Method according to any of the preceding claims, **characterized in that** the elements are at least initially deactivated for pruning.

9. Apparatus (1) for data processing, comprising means (2) for carrying out the method according to any of claims 1 to 8, wherein the means (2) comprise a computing device (3) and a storage device (4).

10. Motor vehicle (50) comprising at least one apparatus (1) according to claim 9.

11. Motor vehicle (50) according to claim 10, **characterized in that** the motor vehicle (50) comprises a surroundings sensor system (51) for acquiring surroundings data, the surroundings sensor system (51) and the at least one apparatus (1) being configured such that the acquired surroundings data are supplied to the neural network (5) as temporally varying input data (7).

12. Computer program comprising commands which, when the computer program is executed by a computer, cause the computer to execute the method according to any of claims 1 to 8.

13. Data carrier signal which transmits the computer program according to claim 12.

**Revendications**

1. Procédé mis en œuvre par ordinateur de compression d'un réseau neuronal (5), dans lequel le réseau neuronal (5) effectue une reconnaissance d'environnement d'un véhicule automobile (50), dans lequel des données d'entrée (7) variant dans le temps sont amenées au réseau neuronal (5), dans lequel les données d'entrée (7) sont des données de capteur, dans lequel les données de capteur ont été acquises par un système de capteurs d'environnement du véhicule automobile (50), dans lequel des différences d'activation temporelle (20) d'éléments du réseau neuronal (5) sont déterminées pour des données d'entrée (7) voisines dans le temps, dans lequel une différence d'activation temporelle (20) est une différence qui est déterminée à partir d'activations ou de valeurs d'une sortie, qui sont inférées par un élément respectif du réseau neuronal (5) à des instants voisins, et dans lequel les différences d'activation temporelle (20) déterminées sont mises à disposition afin d'élaguer le réseau neuronal (5) en fonction des différences d'activation temporelle (20) déterminées, et dans lequel le réseau neuronal (5) est élagué en fonction des différences d'activation temporelle (20) déterminées.

**2.** Procédé selon la revendication 1, **caractérisé en ce qu'**au moins une partie des différences d'activation (20) déterminées est déterminée en fonction d'au moins un paramètre d'influence (30).

**3.** Procédé selon l'une des revendications précédentes, **.caractérisé en ce que,** sur la base des différences d'activation temporelle (20) déterminées, un classement (22) des éléments est établi pour effectuer l'élagage en fonction du classement (22) établi.

**4.** Procédé selon la revendication 3, **caractérisé en ce que** le classement (22) est déterminé de telle sorte que les éléments du réseau neuronal (5) présentant les plus grandes différences d'activation temporelle (20) sont élagués.

**5.** Procédé selon la revendication 3 ou 4, **caractérisé en ce que** le classement (22) est établi en tenant compte d'au moins une grandeur cible (31).

**6.** Procédé selon l'une des revendications précédentes, **caractérisé en ce que** la détermination des différences d'activation (20) et/ou l'élagage est limité(e) à des couches sélectionnées du réseau neuronal (5).

**7.** Procédé selon l'une des revendications précédentes, **caractérisé en ce que** le réseau neuronal (5) est réentraîné à la suite de l'élagage.

**8.** Procédé selon l'une des revendications précédentes, **caractérisé en ce que** les éléments pour l'élagage sont désactivés au moins dans un premier temps.

**9.** Dispositif (1) de traitement de données, comprenant des moyens (2) pour exécuter le procédé selon l'une quelconque des revendications 1 à 8, dans lequel les moyens (2) comprennent un équipement de calcul (3) et un équipement de stockage (4).

**10.** Véhicule automobile (50) comprenant au moins un dispositif (1) selon la revendication 9.

**11.** Véhicule automobile (50) selon la revendication 10, **caractérisé en ce que** le véhicule automobile (50) comprend un système de capteurs d'environnement (51) pour l'acquisition de données d'environnement, dans lequel le système de capteurs d'environnement (51) et l'au moins un dispositif (1) sont conçus pour que les données d'environnement acquises soient amenées au réseau neuronal (5) en tant que données d'entrée (7) variant dans le temps.

**12.** Programme d'ordinateur, comprenant des instructions qui, lors de l'exécution du programme d'ordinateur par un ordinateur, amènent celui-ci à exécuter le procédé selon l'une quelconque des revendications 1 à 8.

**13.** Signal de support de données transmettant le programme d'ordinateur selon la revendication 12.

FIG. 1

FIG. 2

FIG. 3

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 20180336468 A1

- US 20180114114 A1

**In der Beschreibung aufgeführte Nicht-Patentliteratur**

- **AUS P. MOLCHANOV et al.** Pruning Convolutional Neural Networks for Resource Efficient Inference. *arXiv: 1611.06440v2 [cs.LG*, 08 June 2017, 1-17, https://arxiv.org/pdf/1611.06440.pdf

- Pruning Convolution Neural Network (SqeezeNet) for Efficient Hardware Development. **AKASH S. GAIKWAD**. Masterarbeit. Purdue University, 01 December 2018